# EUROPÄISCHE PATENTSCHRIFT

(11) **EP 2 653 917 B1**
(45) Veröffentlichungstag und Bekanntmachung des Hinweises auf die Patenterteilung: **08.02.2017**
(21) Anmeldenummer: 12164500.6
(22) Anmeldetag: 17.04.2012
(51) Int. Cl.: G03B 17/56, G03B 17/14

(54) **Objektivadapter für Kameras**
Lens adapter for cameras
Adaptateur d'objectif pour caméras

(43) Veröffentlichungstag der Anmeldung: 23.10.2013
(73) Patentinhaber: Basler AG, 22926 Ahrensburg (DE)
(72) Erfinder: Brachmann, Ralf, 22926 Ahrensburg (DE); Kholopov, Andriy, 22926 Ahrensburg (DE); Kress, Sven, 23689 Pansdorf (DE)
(74) Vertreter: Eisenführ Speiser

(56) Entgegenhaltungen:
- EP-B1- 1 223 749
- JP-A- 10 301 009
- US-A- 5 400 072
- US-A1- 2002 154 239
- US-B1- 6 762 796

## Beschreibung

Die Erfindung betrifft eine Kameraanordnung mit zumindest einem Kameragehäuse und einem jedem Kameragehäuse zugeordneten Befestigungsmittel zur Verbindung eines Objektivs mit dem Kameragehäuse, umfassend einen im Kameragehäuse montierten digitalen Bildsensor, ein Adapterrohr mit einem im wesentlichen zylindrischen Korpus, einem durch eine innere Wandfläche begrenzten Innenraum und einem Anschlussflansch für ein Objektiv an einem ersten Ende des Adapterrohrs, und eine Frontplatte des Kameragehäuses mit zumindest einer optischen Öffnung und mindestens zwei in einem Bereich um die optische Öffnung angeordneten ersten Befestigungselemente zur Befestigung des Kameragehäuses an einer Halterung.

Kameraanordnungen solcher Art werden dazu eingesetzt, wenn in modulartiger Bauweise einerseits Objektive, andererseits Kameragehäuse in solcher Ausrichtung zueinander montiert werden sollen, dass die Abbildung des Objektivs in das Kameragehäuse fällt. Unter einer modulartigen Bauweise ist hierbei zu verstehen, dass unterschiedliche Kameragehäuse jeweils lösbar an der Kameraanordnung befestigt werden können und ebenso unterschiedliche Objektive jeweils lösbar an der Kameraanordnung befestigt werden können.

Eine Anforderung an solche Kameraanordnungen liegt darin, dass einerseits ein kompakter Aufbau angestrebt wird, damit die Kameraanordnung selbst möglichst wenig Raum einnimmt. Eine typische Anwendung solcher Kameraanordnungen liegt beispielsweise in der reihenweisen Anordnung mehrerer Zeilenkameragehäuse mit entsprechend mehreren dazu fluchtend in den optischen Achsen angeordneten Objektiven. Durch eine solche Anordnung wird es möglich, einen breiten Erfassungsbereich durch die Zeilenkameraanordnung bereitzustellen. Wünschenswert ist jedoch gerade in dieser Anwendung eine kompakte Abmessung der Kameraanordnung, um eine möglichst lückenlose Anordnung der Zeilenkameragehäuse und der Objektive zu ermöglichen mit dem Ziel einer durchgehenden, weitestgehenden verzerrungsfreien Bilderfassung über die gesamte Breite bei zugleich schmalen Bildwinkeln der Objektive.

Eine weitere Problematik bei solchen Kameraanordnungen liegt in der Montage und den dabei erforderlichen Reinheitsanforderungen. Kameraanordnungen der vorgenannten Art sind regelmäßig empfindlich gegenüber Verschmutzungen, wie Staub, Metallabrieb oder dgl., die im Zuge des Montageprozesses eingebracht werden. Es wird angestrebt, die Montage unter möglichst geringen Reinheitsanforderungen an den Montagebereich durchführen zu können und hierbei dennoch eine Kameraanordnung herstellen zu können, die keine die optische Qualität beeinträchtigenden Verschmutzungen aufweisen.

Aus JP 10 30 10 09 ist eine Kameraanordnung bekannt, bei der ein Objektiv mittels eines Bajonettverschlusses an einem Kameragehäuse befestigt wird, in dem ein Bildsensor angeordnet ist.

Der Erfindung liegt die Aufgabe zugrunde, eine Kameraanordnung bereitzustellen, welche die vorgenannten Aufgaben und Bestrebungen löst bzw. erreicht.

Dies wird erfindungsgemäß durch eine Kameraanordnung gemäß des unabhängigen Anspruchs 1 erreicht, bei der ein zweites, dem ersten Ende gegenüberliegendes Ende des Adapterrohrs an der Frontplatte des Kameragehäuses mittels zumindest zwei zweiten Befestigungselementen befestigt ist, die von der Mittelachse des jeweiligen Adapterrohrs weiter beabstandet sind als die innere Wandfläche des Adapterrohrs und dass die optische Öffnung der Frontplatte ein axialen Abschnitt mit zumindest teilweiser zylindrischer Außenwand aufweist, dessen Durchmesser in auf geringes Spiel tolerierter Passung zum Außendurchmesser eines Zentrierflanschs am zweiten Ende des Adapterrohrs bemessen ist.

Mit der erfindungsgemäßen Kameraanordnung wird eine kompakte und zugleich einfach zu montierende Konstruktion bereitgestellt, welche es ermöglicht, dass eine modulare und lösbare Befestigung und Ausrichtung eines Objektivs zu einem Kameragehäuse erreicht wird und hierbei die Abmessungen der dazu verwendeten Kameraanordnung nicht die Abmessungen des Objektivs selbst und nicht die Abmessungen des Kameragehäuses selbst in der Ebene senkrecht zur optischen Achse überschreitet.

Erfindungsgemäß wird es ermöglicht, die zweiten Befestigungselemente außerhalb des Innenraums des Adapterrohrs anzuordnen. Da der Innenraum des Adapterrohrs regelmäßig zur optischen Übertragung genutzt wird und folglich schmutzempfindlich ist, wird durch diese Anordnung eine bevorzugte, schmutzunempfindliche Montage erreicht, da die Befestigungselemente in einem Bereich angeordnet und montiert sind, der für die Reinheit im optisch relevanten Bereich keine Bedeutung hat.

Durch den erfindungsgemäß bereitgestellten Zentrierflansch wird einerseits eine präzise Ausrichtung des Adapterrohrs zum Kameragehäuse in der Ebene senkrecht zur optischen Achse bzw. Mittelachse des Adapterrohrs erreicht. Zum anderen wird durch einen solchen Zentrierflansch eine schon während des Montagevorgangs wirksame Sperrwirkung gegen Schmutzpartikel oder Späne oder dgl. erzielt, die während des Montagevorgangs von außerhalb in den Innenraum des Adapterrohrs eindringen könnten. Der Zenbtrierflansch wirkt auf diese Weise vorteilhaft mit den zweiten Befestigungselementen zusammen, da eine Zentrierwirkung mit hoher optischer Präzision nicht durch die Befestigungselemente selbst bereitgestellt werden muss. Unter einer auf geringes Spiel tolerierten Passung ist hierbei eine Passung zu verstehen, die mit Handkraft zusammengefügt werden kann und einen praktisch spielfreien Sitz des Zentrierflansches in dem Absatz bewirkt. Dies kann eine leichte Spielpassung oder Übergangspassung sein.

Gemäß einer ersten bevorzugten Ausführungsform ist vorgesehen, dass die zweiten Befestigungselemente entsprechende Bohrungen in einem an dem Adapterrohr ausgebildeten Flansch umfassen, deren Mittelachsen außerhalb von dem Innenraum des Adapterrohrs liegen. Diese Ausführungsform weist den Vorteil auf, dass eine lösbare Befestigung durch Schrauben erreicht wird, die hierbei jedoch gelegentliche auftretende Spanbildung keinen nachteiligen Einfluss auf die Reinheit des für die optische Übertragung relevanten Raumes hat, da die Befestigung außerhalb des optischen Übertragungsweges erfolgt und bei der Montage auftretende Späne folglich nicht in den optischen Übertragungsbereich gelangen können.

Weiterhin ist es bevorzugt, wenn die zweiten Befestigungselemente zur Befestigung des Adapterrohres gleichmäßig über den Umfang verteilt sind. Mit dieser Ausführungsform wird eine Anpassung des Azimut-Winkels in definierten, von der Anzahl der Befestigungselemente abhängigen Winkelschritten ermöglicht - so zB. Bei zwei Befestigungselementen in 180°-Schritten, bei drei Befestigungselementen in 120°-Schritten und so weiter. Weiterhin wird die Fertigung und Montage aufgrund der wiederholend auftretenden Fertigungsmaße und Montagepunkte vereinfacht.

Noch weiter ist es bevorzugt, wenn das Adapterrohr mittels vier in einer 90° Teilung um die Mittelachse des Adapterrohrs angeordnete zweite Befestigungselemente an der Frontplatte des Kameragehäuses befestigt ist. Hierdurch wird eine Anpassung des Azimut-Winkels in 90°-Schritten ermöglicht und folglich eine modulare Umbaumöglichkeit für unterschiedliche Kameragehäuse und Objektive erzielt. Dies wird erreicht, indem einerseits das Objektiv an einem Ende eines Adapterrohrs befestigt wird, was beispielsweise durch eine lösbare Befestigung mittels eines Bajonettverschlusses oder dgl. erzielt wird. Zum anderen wird das Kameragehäuse mittels ersten Befestigungselementen an einem Halter befestigt, wobei diese Befestigungselemente vorzugsweise in einer genormten Anordnung zueinander angeordnet sind, um eine modulare Befestigung unterschiedlicher Kameragehäuse zu ermöglichen. Das Adapterrohr und das Kameragehäuse werden nun durch zweite Befestigungselemente miteinander verbunden, die solcherart angeordnet sind, dass eine wahlweise in 90°-Schritten versetzte Montage des Adapterrohrs an dem Kameragehäuse möglich ist.

Dabei ist es bei den beiden vorgenannten Ausführungsformen besonders bevorzugt, wenn vier in einer 90° Teilung um die optische Öffnung angeordnete erste Befestigungselemente an der Frontplatte des Kameragehäuses angeordnet sind und die vier zweiten Befestigungselemente gegenüber den ersten Befestigungselementen um einen Winkel versetzt sind, der größer als 0° und kleiner als 45° ist, wobei vorzugsweise die ersten und zweiten Befestigungselemente auf konzentrischen Kreisen um die Mittellängsachse des Adapterrohrs angeordnet sind. Es besteht regelmäßig das Problem, dass die zweiten Befestigungselemente auf engem Raum, zugleich aber unter Einsparung unnötigen Materials und unnötiger Abmessungsvergrößerungen angeordnet werden sollten. Dies wird erfindungsgemäß erreicht, indem die zweiten Befestigungselemente um einen bestimmten spitzen Winkel aus einem kleinen Winkelbereich gegenüber den ersten Befestigungselementen versetzt angeordnet werden. Dieser Winkelbereich ist größer als 0°, so dass eine Ausrichtung der Befestigungselemente in radialer Fluchtung zueinander ausgeschlossen ist und kleiner als 45°, so dass eine Ausrichtung der ersten und zweiten Befestigungselemente in einer wechselweisen Teilung von 45° ebenso ausgeschlossen ist. Grundsätzlich ist dabei der Versatz um diesen Winkelbereich so zu verstehen, dass sowohl die ersten Befestigungselemente in einer Teilung von 90° als auch die zweiten Befestigungselemente in einer Teilung von 90° angeordnet sind. Bei dieser Anordnung der jeweils ersten und zweiten Befestigungselemente ist dann ein Versatz von jeweils einem ersten zu einem zweiten Befestigungselement vorzusehen, der in dem angegebenen Winkelbereich zwischen 0 und 45° liegt, wobei dieser Winkelversatz zwischen den in entsprechender nächster 90°-Teilung liegenden ersten und zweiten Befestigungselemente und allen weiteren, in der Teilung folgenden ersten und zweiten Befestigungselementen in gleicher Weise besteht.

Durch den spezifischen Winkelversatz der ersten und zweiten Befestigungselemente wird einerseits eine konstruktiv ungünstige Überschneidung der ersten und zweiten Befestigungselemente vermieden, die zu erheblicher Raumforderung in radialer Richtung führen würde. Andererseits wird eine einfache Montage ermöglicht, weil die Befestigungselemente jeweils paarweise nah beieinander angeordnet werden können und eine effiziente Kraftübertragung von einem jeweils ersten Befestigungselement zu einem hierzu in einem kleinen Winkel versetzt angeordneten zweiten Befestigungselement erreicht wird. Die Dimensionierung des Adapterrohrs und der Frontplatte des Kameragehäuses zur Sicherstellung einer schwingungssicheren und gegen Temperaturdehnungen im Wesentlichen unempfindlichen Befestigung und Ausrichtung von Objektiv und Kameragehäuse zueinander kann daher aufgrund der realisierten kurzen mechanischen Übertragungswege klein und kompakt ausfallen.

Dabei ist insbesondere vorgesehen, dass die jeweils vier zweiten Befestigungselemente gegenüber den ersten Befestigungselementen um einen Winkel versetzt sind, der größer als 0° und kleiner als 30°, insbesondere kleiner als 15° ist. Die Auswahl des Versatzwinkels zwischen den ersten und zweiten Befestigungselementen hängt im Wesentlichen von der Abmessung der ersten und zweiten Befestigungselemente ab, insbesondere ist angestrebt, die ersten und zweiten Befestigungselemente um einen nur so kleinen Winkel zueinander zu versetzen, dass eine Überschneidung vermieden und ein solcher Abstand erreicht wird, dass eine ausreichende konstruktive Festigkeit zwischen den Befestigungselementen erhalten bleibt. So kann beispielsweise bei Bereitstellung von Bohrungen oder Gewindebohrungen als Bestandteil der ersten und zweiten Befestigungselemente der Winkelversatz vorzugsweise so gewählt werden, dass zwischen den Bohrungen ein Abstand eingehalten wird, der zumindest oder genau dem Bohrungsdurchmesser entspricht. Grundsätzlich ist dabei zu verstehen, dass die ersten und zweiten Befestigungselemente nicht zwangsläufig auf einem Kreis liegen müssen und nicht zwangsläufig, sofern sie auf einem Kreis liegen, die ersten Befestigungselemente auf einem Kreis mit gleichem Radius wie die zweiten Befestigungselemente liegen müssen. Der Versatzwinkel kann beispielsweise 7° sein.

Insbesondere ist es bevorzugt, dass eine Adapterplatte mit zwei oder mehr optischen Öffnungen, die ausgebildet ist zur Verbindung mit entsprechend zwei oder mehr Kameragehäusen nebeneinander mittels der ersten Befestigungselemente, wobei sich die an den Kameragehäusen befestigten Adapterrohre durch die optischen Öffnungen der Adapterplatte hindurch erstrecken und die Mittelachsen der von zumindest zwei Adapterrohren auf einer Linie liegen. Bei dieser Fortbildung wird eine spezifische, vorteilhafte Anordnung von Kameragehäusen einer Zeilenkamera bereitgestellt, die miteinander solcherart verschaltet werden können, dass sie eine durchgehende und fluchtende Zeile erfassen. Die erfindungsgemäße Kameraanordnung ermöglicht es hierbei einerseits, die Kameragehäuse und Objektive an einer einzigen Adapterplatte zu befestigen, was vorteilhaft für die Ausrichtungsgenauigkeit und Schwingungsunempfindlichkeit ist. Dabei ist es insbesondere bevorzugt, durch den gemäß weiteren bevorzugten Ausführungsformen vorgesehenen spezifischen Versatz zwischen den ersten und zweiten Befestigungselementen die Kameragehäuse und die Objektive unmittelbar benachbart zueinander montiert werden, so dass der Öffnungswinkel des Objektivs kleiner ausgebildet werden kann als bei Mehrfachzeilenkameraanordnungen nach dem Stand der Technik, ohne dass hierbei auf eine lückenlose Zeilenabtastung beliebig breiter Abtastungsbereiche verzichtet werden muss.

Eine weitere bevorzugte Ausführungsform weist eine äußere Mantelfläche am Adapterrohr auf, welche konzentrisch zur Außenfläche des Zentrierflansches liegt und die am zweiten Ende des Adapterrohres angeordnet ist. Diese Mantelfläche kann insbesondere dazu dienen, das Adapterrohr präzise konzentrisch in einer Halterung auszurichten, indem die Mantelfläche in einer entsprechenden zylindrischen Innenfläche eines Halters, beispielsweise einer optischen Öffnung einer Adapterplatte gespannt wird. Insbesondere dann, wenn ein schweres und langes Objektiv an dem Adapterrohr montiert wird, kann hierdurch eine präzise und zugleich belastbare Befestigung des Adapterrohrs erreicht werden und weiterhin eine präzise Ausrichtung mehrerer Kameragehäuse mit zugehörigen Objektiven in Bezug zueinander an einer Adapterplatte verwirklicht werden.

Noch weiter ist es bevorzugt, dass die ersten Befestigungselemente Bohrungen, insbesondere Gewindebohrungen in der Frontplatte des Kameragehäuses sind. Durch Bohrungen, in welche Schrauben eingesetzt oder Gewindebohrungen, in welche Schrauben eingeschraubt oder Gewindebolzen befestigt werden können, wird eine lösbare, zugleich robuste und präzise Befestigung des Kameragehäuses an der Adapterplatte erreicht.

Weiterhin ist es bevorzugt, wenn die zweiten Befestigungselemente Bohrungen, insbesondere Gewindebohrungen in der Frontplatte des Kameragehäuses umfassen, mit darin befestigten Befestigungsschrauben, welche durch Bohrungen in einem Flansch am zweiten Ende des Adapterrohrs gesteckt sind. Durch diese Befestigung des Adapterrohrs durch eine Vierfachverschraubung wird einerseits eine wiederum lösbare und zugleich robuste und präzise Verbindungsweise zwischen Adapterrohr und Adapterplatte erreicht. Insbesondere ist diese Verbindungsweise bevorzugt, wenn auch die ersten Befestigungselemente durch Bohrungen gebildet werden, um hierbei montagetechnisch eine Vereinfachung zu erzielen.

Ein weiterer Aspekt der Erfindung ist eine Kameraanordnung der zuvor beschriebenen Weise, welche mehrere als Kamera mit Zeilensensor (line scan) ausgebildete Kameragehäuse, wobei jedes Kameragehäuse mit einem Adapterrohr verbunden ist, und welche eine Adapterplatte, die eine der Anzahl der Kameragehäuse entsprechende Anzahl optischer Öffnungen aufweist durch welche sich die entsprechend mehreren Adapterrohre erstrecken und dass die Zeilensensoren der Kameras parallel zueinander ausgerichtet sind. Gemäß dieser bevorzugten Ausführungsform wird eine Zeilenkameraanordnung bereitgestellt, die mehrere Zeilenkameras in entsprechenden Zeilenkameragehäusen aufweist und die miteinander so verschaltet und solcherart angeordnet sind, dass aus den einzelnen Zeilenerfassungen der mehreren Kameras eine zusammengesetzte Zeilenerfassung erfolgen kann. Dabei können die Bildsignale der einzelnen Kameras zu einer durchgehenden Bildzeile zusammengesetzt werden aufgrund der parallelen Ausrichtung der Zeilensensoren zueinander. Die Zeilensensoren können dabei in Linie oder parallel versetzt zueinander angeordnet sein, in letzterem Fall ist eine rechnerische Kompensation der Bilddaten zum Ausgleich des Versatzes erforderlich.
Insbesondere ist es dabei bevorzugt, wenn die Mittelachsen der Adapterrohre auf einer Linie liegen. Mit dieser Anordnung und Zusammensetzung wird durch die erfindungsgemäße Kameraanordnung in erfindungsgemäß vorteilhafter Weise erzielt, dass ohne rechneriche Kompensation eine Bildzeile aus mehrteren Zeilensensoren aufgebaut wird. Durch den kompakten Aufbau wird eine unmittelbar benachbarte Anordnung der Zeilenkameras mit geringem Abstand ihrer optischen Achsen zueinander erreicht.

Schließlich kann die erfindungsgemäße Kameraanordnung fortgebildet werden durch mehrere als Kamera mit Flächensensor (area scan) ausgebildete Kameragehäuse, wobei jedes Kameragehäuse mit einem Adapterrohr verbunden ist, und gekennzeichnet durch eine Adapterplatte, die eine der Anzahl der Kameragehäuse entsprechende Anzahl optischer Öffnungen aufweist durch welche sich die entsprechend mehreren Adapterrohre erstrecken und dass die Mittelachsen der Adapterrohre zueinander in einer Vielzahl von Spalten und Zeilen angeordnet sind und solcherart ein Matrixfeld ausbilden.Mit dieser Fortbildung wird eine lückenlose Abbildung eines großen Flächenbereichs mit hoher Auflösung ermöglicht, indem eine präzise und kompakte Anordnung mehrere Objektive und digitaler Kameras in einem sich in zwei Raumrichtungen erstreckenden, flächigen Matrixfeld umgesetzt wird.

Bevorzugte Ausführungsformen der Erfindung werden anhand der beiliegenden Figuren erläutert. Es zeigen:

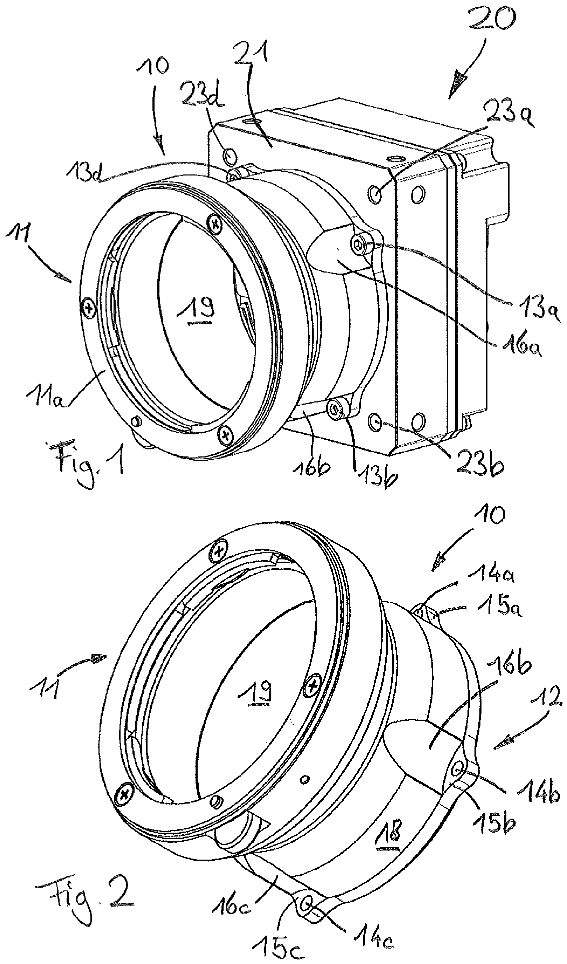

Fig. 1 eine perspektivische Ansicht einer Kameraanordnung in einer Einzelanwendung eines Kameragehäuses mit Objektiv gemäß einer ersten Ausführungsform der Erfindung,
Fig. 2 eine perspektivische Einzelansicht des Adapterrohrs der Kameraanordnung gemäß Figur 1
Fig. 3 eine Seitenansicht der Kameraanordnung nach Fig. 1,
Fig. 4 eine Seitenansicht des erfindungsgemäßen Adapterrohres nach Fig. 2,
Fig. 5 eine entlang des Schnittes A-A in Fig. 4 geschnittene Frontalansicht der ersten Ausführungsform der Erfindung,
Fig. 6 eine entsprechend geschnittene Frontalansicht einer zweiten Ausführungsform der Erfindung,
Fig. 7 eine entsprechend geschnittene Frontalansicht einer dritten Ausführungsform der Erfindung,
Fig. 8 eine entsprechend geschnittene Frontalansicht einer vierten Ausführungsform der Erfindung,
Fig. 9 eine perspektivische Ansicht einer Doppelanordnung mit zwei Kameragehäusen gemäß einer fünften Ausführungsform der Erfindung, und
Fig. 10 eine Frontalansicht der erfindungsgemäßen Kameraanordnung in einer Vierfach-Zeilenkameraanordnung gemäß einer sechsten Ausführungsform der Erfindung.Bezug nehmend zunächst auf die Figuren 1 bis 4 umfasst die erfindungsgemäße Kameraanordnung ein Adapterrohr 10 und eine Frontplatte 21 einer Zeilenkamera 20. Das Adapterrohr 10 weist ein erstes Ende 11 auf, an dem ein Bajonettverschluss 11a mittels drei Schrauben befestigt ist. Dieser Bajonettverschluss dient zur winkeldefinierten und lösbaren Verbindung eines Objektivs mit dem Adapterrohr.

Das Adapterrohr weist einen optischen Innenraum 19 auf, der zylindrisch begrenzt ist. Die Außenwand des Adapterrohrs ist im Wesentlichen zylindrisch ausgebildet. An einem zweiten Ende 12 des Adapterrohrs ist das Adapterrohr mit der Frontplatte 21 verbunden. Diese Verbindung wird mittels vier Schrauben 13a-d erreicht, die in einer Teilung von 90° auf einem Kreis angeordnet sind. Die Schrauben 13a-d sind durch parallel zur Mittellängsachse 100 des Adapterrohrs 10 ausgerichtete jeweilige Bohrungen 14a-d gesteckt. Diese Bohrungen sind in einem durch vier sich radial erstreckende Vorsprünge 15a-d gebildeten Flansch am zweiten Ende des Adapterrohrs eingebracht. Ausgehend von diesen vier Bohrungen 14a-d ist die Außenfläche des Adapterrohrs mit entsprechend vier Vertiefungen 16a-d versehen, die sich in Richtung des ersten Endes erstrecken. Diese vier Vertiefungen ermöglichen es, die vier Schrauben 13a-d in die Bohrungen 14a-d einzusetzen und festzuziehen.

Zur Montage der Zeilenkamera 20 an einem Halter oder dergleichen sind in der Frontplatte 21 vier Durchgangsgewindebohrungen 23a-d ausgebildet. Diese vier Durchgangsgewindebohrungen 23a-d liegen bei montiertem Adapterrohr parallel zur Mittellängsachse des Adapterrohres. Sie sind in den vier Eckbereichen der Frontplatte 21 und in einer 90°-Teilung zueinander angeordnet und die Verbindungslinie jeweils zwei benachbarter Gewindebohrungen liegt parallel zu einer Außenkante der Frontplatte 21.

Die Schrauben 13a-d sind durch die Bohrungen 14a-d gesteckt und in entsprechende vier zweite Gewindebohrungen eingebracht, die in der Frontplatte 21 ausgebildet sind. Diese vier zweiten Gewindebohrungen sind auf einer Kreisbahn in einer Teilung von 90° zueinander und damit gleichmäßig über den Umfang verteilt angeordnet.

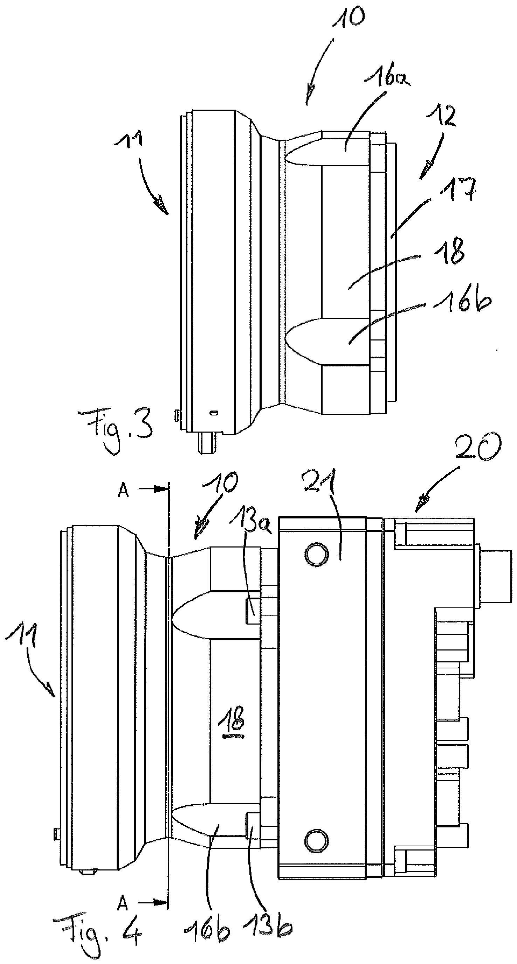

Wie aus Fig. 3 ersichtlich, weist das Adapterrohr an seinem zweiten Ende einen Zentrierflansch 17 auf, der in einem entsprechenden Absatz um die Öffnung in der Frontplatte 21 eingreift und eine präzise Zentrierung des Adapterrohrs und damit des Objektivs in Bezug auf die Kamera 20 bewirkt. Benachbart zum Zentrierflansch 17 weist das Adapterrohr eine Zentriermantelfläche 18 auf. Diese Zentriermantelfläche liegt coaxial zum Zentrierflansch um die Mittellängsachse 100 des Adapterrohres. Sie ist durch die Vertiefungen 16a-d teilweise unterbrochen. Die Zentriermantelfläche 18 dient dazu, das Adapterrohr präzise und schwingungsarm in einer entsprechend tolerierten Bohrung eines Halters aufzunehmen.

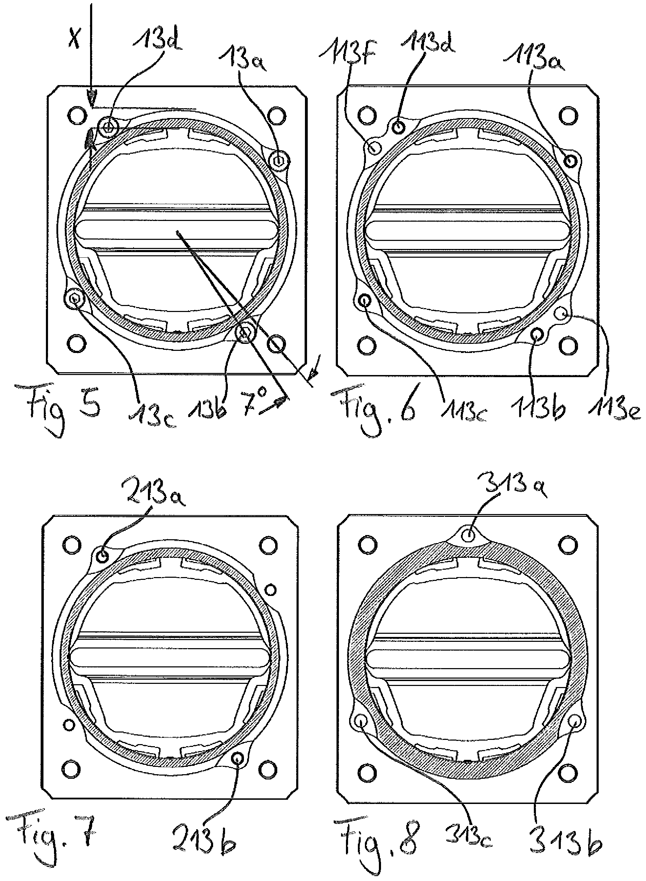

Wie aus Figur 5 ersichtlich ist, liegt zwischen einer Durchgangsgewindebohrung 23c zur Befestigung des Kameragehäuses und einer dazu unmittelbar benachbarten zweiten Gewindebohrung zur Befestigung des Adapterrohres ein Versatzwinkel von etwa 7°, wodurch eine ausreichende Festigkeit, kompakte Bauweise und kurze mechanische Kraftübertragungswege zugleich erzielt wird. Die Ausdehnung der Frontplatte 21 und des Adapterrohrs muss daher in der Ebene senkrecht zur optischen Achse nicht größer sein als die Abmessung des Kameragehäuses der Kamera 20 selbst. Durch diese Anordnung wird erreicht, dass die Längsachse jeder der Schrauben 13a-d, welche durch die Bohrungen 14a-d gesteckt sind, von einer tangential zum Außenumfang des Adapterrohres am zweiten Ende 12 und parallel zum benachbarten Rand der Frontplatte verlaufenden Linie einen Abstand X einhält, der größer ist als die Hälfte des Durchmessers der Bohrung 14a-d, insbesondere einen Abstand X der größer ist als der Schraubenkopf der entsprechenden Schraube 13a-d.

Fig. 6 zeigt eine zweite Ausführungsform. Bei dieser Ausführungsform sind insgesamt sechs Bohrungen 113 a-f an dem zweiten Ende des Adapterrohrers bereitgestellt. Von diesen sechs Öffnungen sind vier Öffnungen 113 a-d in einer 90° Teilung zueionander angeordnet und zwei Bohrungen 113 e,f in einer 180°Teilung, wobei diese zwei Bohrungen113e,f um einen Winkel von 7° versetzt zu den Bohrungen 113b,d sind.

Fig. 7 zeigt eine dritte Ausführungsform. Bei dieser Ausführungsform sind insgesamt zwei Bohrungen 213 a,b an dem zweiten Ende des Adapterrohrers in einer 180°Teilung, bereitgestellt.

Fig. 8 zeigt eine vierte Ausführungsform. Bei dieser Ausführungsform sind insgesamt drei Bohrungen 313 a-c an dem zweiten Ende des Adapterrohrers in einer 120°Teilung, bereitgestellt.

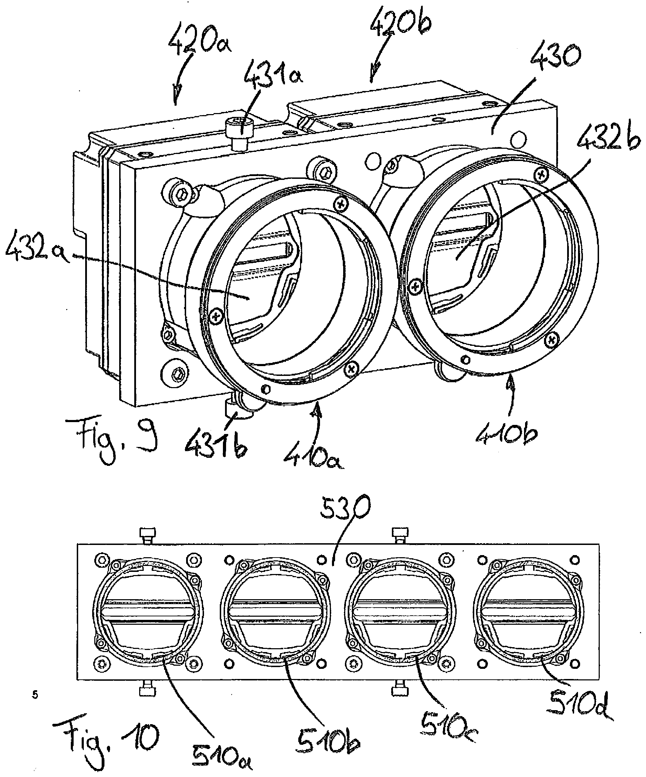

Fig. 9 zeigt eine Doppelanordnung von zwei Kameragehäusen 420a,b an einer einzigen, rechteckig ausgebildeten Adapterplatte 430. Die Adapterplatte weist zwei Öffnungen 432a,b auf. In entsprechend fluchtender Weise zu den Zeilenkameras 420a,b sind zwei Adapterrohre 410a,b an der Adapterplatte 430 befestigt. Wie ersichtlich ist, ermöglicht die konstruktive Ausgestaltung der Befestigung der Adapterrohre in Bezug auf die Kameragehäuse eine unmittelbare Benachbarung der Adapterrohre und folglich der Objektive und der Kameragehäuse an der Adapterplatte 430.

Die Adapterplatte dient der Befestigung und Zentrierung der beiden Kamera-Objektiv-Einheiten zueinander. Zu diesem Zweck weist die Adapterplatte zwei zueinander in ihrer Lage präzise tolerierte optische Öffnungen auf, in denen die Zentriermantelfläche der beiden Adapterrohre 410a,b durch eine entsprechende Passung zentriert und mittels jeweils zweier radial von außen eingesetzter Schrauben 431 a,b, deren Stirnfläche auf die Zentriermantelfläche drücken, festgesetzt sind.

Fig. 10 zeigt eine entsprechende Vierfachanordnung von vier Adapterrohren 510a-d an einer einzigen Adapterplatte 530. Auch hier wird durch die kompakte Bauweise eine unmittelbare Benachbarung der Objektive und Zeilenkameragehäuse auf der Vorder- bzw. Rückseite bei gleichzeitig günstiger Kraftübertragung und Erschütterungsunempfindlichkeit erzielt.

Mit der Erfindung wird die Möglichkeit eröffnet, mehrere Zeilenkameras in Reihe für eine effektive Auflösung anzuordnen. In analoger Weise könnten Area-Kameras ebenso zueinander angeordnet werden, das heißt, mehrere Flächensensorkameras in Spalten und Reihen zueinander an einer Adapterplatte kompakt und präzise positioniert werden.

Die Erfindung erreicht eine mechanisch ausbalancierte und stabile Aufhängung, was insbesondere auch bei Verwendung schwerer Objektive vorteilhaft ist und mechanische Schwingungen weitestgehend unterdrückt. Es wird eine symmetrische Wärmeableitung direkt an der Adapterplatte ermöglicht, wodurch Ungenauigkeiten durch Wärmeverzug vermieden werden. Die Erfindung kann es ermöglichen, kleine Rotationsfehler der Sensoren in der Kamera zum Motiv individuell für jede Kamera einfach zu korrigieren. Dies wird erreicht, indem die für die Kamerabefestigung bereitgestellten Bohrungen in der Adapterplatte leicht vergrößert im Verhältnis zur durchgesteckten Schraube oder als Langloch ausgeführt werden, so dass eine Ausrichtung der Kamera bei gelöster Schraubverbindung und Fixierung der Ausrichtung durch Anziehen der Schraubverbindung möglich wird. Durch die vorteilhafte Anordnung aller Kameras an einer einzigen Adapterplatte wird eine Fixierung der optischen Achsen der Kameras zueinander mit geringen Toleranzen erreicht und eine Justage der Kameras zueinander kann regelmäßig entfallen.

## Patentansprüche

1. Kameraanordnung mit zumindest einem Kameragehäuse (20) und einem jedem Kameragehäuse zugeordneten Befestigungsmittel zur Verbindung eines Objektivs mit dem Kameragehäuse, umfassend
- einen im Kameragehäuse montierten digitalen Bildsensor,
- ein Adapterrohr (10) mit einem im wesentlichen zylindrischen Korpus, einem durch eine innere Wandfläche begrenzten Innenraum (19) und einem Anschlussflansch (11a) zur lösbaren Befestigung unterschiedlicher Objektive an einem ersten Ende (11) des Adapterrohrs, und
- eine Frontplatte (21) des Kameragehäuses mit zumindest einer optischen Öffnung und mindestens zwei in einem Bereich um die optische Öffnung angeordneten ersten Befestigungselementen (23a-d) zur Befestigung des Kameragehäuses an einer Halterung,
**dadurch gekennzeichnet, dass**
- ein zweites, dem ersten Ende gegenüberliegendes Ende (12) des Adapterrohrs an der Frontplatte des Kameragehäuses mittels zumindest zwei zweiten, zur Mittelachse der jeweilig Adapterrohrs parallelen Befestigungselementen (13a-d, 14a-d) befestigt ist, die von der Mittelachse des jeweiligen Adapterrohrs weiter beabstandet sind als die innere Wandfläche des Adapterrohrs und dass
- die optische Öffnung der Frontplatte einen axialen Abschnitt mit zumindest teilweiser zylindrischer Außenwand aufweist, dessen Durchmesser in auf geringes Spiel tolerierter Passung zum Außendurchmesser eines Zentrierflanschs (17) am zweiten Ende (12) des Adapterrohrs bemessen ist.

2. Kameraanordnung nach Anspruch 1
**dadurch gekennzeichnet, dass** die zweiten Befestigungselemente entsprechende Bohrungen in einem an dem Adapterrohr ausgebildeten Flansch umfassen, deren Mittelachsen außerhalb von dem Innenraum des Adapterrohrs liegen.

3. Kameraanordnung nach Anspruch 1 oder 2,
**dadurch gekennzeichnet, dass** die zweiten Befestigungselemente zur Befestigung des Adapterrohres gleichmäßig über den Umfang verteilt sind.

4. Kameraanordnung nach einem der vorhergehenden Ansprüche,
**dadurch gekennzeichnet, dass** das Adapterrohr mittels vier in einer 90° Teilung um die Mittelachse des Adapterrohrs angeordnete zweite Befestigungselemente an der Frontplatte des Kameragehäuses befestigt ist.

5. Kameraanordnung nach Anspruch 2 und 3,
**dadurch gekennzeichnet, dass** vier in einer 90° Teilung um die optische Öffnung angeordnete erste Befestigungselemente an der Frontplatte des Kameragehäuses angeordnet sind und dass die vier zweiten Befestigungselemente gegenüber den ersten Befestigungselementen um einen Winkel versetzt sind, der größer als 0° und kleiner als 45° ist, wobei vorzugsweise die ersten und zweiten Befestigungselemente auf konzentrischen Kreisen um die Mittellängsachse des Adapterrohrs angeordnet sind.

6. Kameraanordnung nach dem vorhergehenden Anspruch 4,
**dadurch gekennzeichnet, dass** die jeweils vier zweiten Befestigungselemente gegenüber den ersten Befestigungselementen um einen Winkel versetzt sind, der größer als 0° und kleiner als 30°, insbesondere kleiner als 15° ist.

7. Kameraanordnung nach einem der vorhergehenden Ansprüche, **gekennzeichnet durch** eine Adapterplatte (430) mit zwei oder mehr optischen Öffnungen (432a-432b)
die ausgebildet ist zur Verbindung mit entsprechend zwei oder mehr Kameragehäusen nebeneinander mittels der ersten Befestigungselemente, wobei sich die an den Kameragehäusen befestigten Adapterrohre **durch** die optischen Öffnungen der Adapterplatte hindurch erstrecken und die Mittelachsen von zumindest zwei Adapterrohren auf einer Linie liegen.

8. Kameraanordnung nach einem der vorhergehenden Ansprüche,
**gekennzeichnet durch** eine äußere Mantelfläche am Adapterrohr, welche konzentrisch zur Außenfläche des Zentrierflansches liegt und die am zweiten Ende des Adapterrohres angeordnet ist.

9. Kameraanordnung nach einem der vorhergehenden Ansprüche,
**dadurch gekennzeichnet, dass** die ersten Befestigungselemente Bohrungen, insbesondere Gewindebohrungen in der Frontplatte des Kameragehäuses sind.

10. Kameraanordnung nach einem der vorhergehenden Ansprüche,
**dadurch gekennzeichnet, dass** die zweiten Befestigungselemente Bohrungen, insbesondere Gewindebohrungen in der Frontplatte des Kameragehäuses umfassen, mit darin befestigten Befestigungsschrauben, welche durch Bohrungen in einem Flansch am zweiten Ende des Adapterrohrs gesteckt sind.

11. Kameraanordnung nach einem der vorhergehenden Ansprüche, **gekennzeichnet durch** mehrere als Kamera mit Zeilensensor ausgebildete Kameragehäuse, wobei jedes Kameragehäuse mit einem Adapterrohr verbunden ist, und
**gekennzeichnet durch** eine Adapterplatte (530) die eine der Anzahl der Kameragehäuse entsprechende Anzahl optischer Öffnungen aufweist **durch** welche sich die entsprechend mehreren Adapterrohre (510a-510d) erstrecken und dass die Zeilensensoren der Kameras parallel zueinander ausgerichtet sind.

12. Kameraanordnung nach Anspruch 11,
**dadurch gekennzeichnet, dass** die Mittelachsen der Adapterrohre auf einer Linie liegen.

13. Kameraanordnung nach einem der vorhergehenden Ansprüche, **gekennzeichnet durch** mehrere als Kamera mit Flächensensor ausgebildete Kameragehäuse, wobei jedes Kameragehäuse mit einem Adapterrohr verbunden ist, und
**gekennzeichnet durch** eine Adapterplatte, die eine der Anzahl der Kameragehäuse entsprechende Anzahl optischer Öffnungen aufweist **durch** welche sich die entsprechend mehreren Adapterrohre erstrecken und dass die Mittelachsen der Adapterrohre zueinander in einer Vielzahl von Spalten und Zeilen angeordnet sind und solcherart ein Matrixfeld ausbilden.

## Claims

1. Camera assembly having at least one camera housing (20) and fixing means co-operating with each and every camera housing in order to connect a lens to the camera housing, comprising
- a digital image sensor mounted in the camera housing,
- an adapter tube (10) with a substantially cylindrical body, an interior (19) bounded by an internal wall surface and a connecting flange (11a) for releasably attaching different lenses to a first end (11) of the adapter tube, and
- a front plate (21) of the camera housing having at least one optical aperture and at least two first fixing elements (23a-d) disposed in an area around the optical aperture for securing the camera housing on a holder,
**characterised in that**
- a second end (12) of the adapter tube opposite the first end is secured to the front plate of the camera housing by means of at least two second fixing elements (13a-d, 14a-d) parallel with the central axis of the respective adapter tube which are spaced at a greater distance from the central axis of the respective adapter tube than the internal wall surface of the adapter tube and
- the optical aperture of the front plate has an axial portion with an at least partially cylindrical external wall, the diameter of which is dimensioned so as to provide a fit, toleranced to a low clearance, with the external diameter of a centring flange (17) on the second end (12) of the adapter tube.

2. Camera assembly as claimed in claim 1,
**characterised in that** the second fixing elements comprise co-operating bores in a flange provided on the adapter tube, the central axes of which lie outside the interior of the adapter tube.

3. Camera assembly as claimed in claim 1 or 2,
**characterised in that** the second fixing elements for securing the adapter tube are distributed uniformly around the circumference.

4. Camera assembly as claimed in one of the preceding claims,
**characterised in that** the adapter tube is secured to the front plate of the camera housing by means of four second fixing elements disposed at a 90° pitch around the central axis of the adapter tube.

5. Camera assembly as claimed in claim 2 and 3,
**characterised in that** four first fixing elements are disposed on the front plate of the camera housing at a 90° pitch around the optical aperture and the four second fixing elements are offset from the first fixing elements by an angle that is greater than 0° and smaller than 45°, and the first and second fixing elements are preferably disposed on concentric circles around the central longitudinal axis of the adapter tube.

6. Camera assembly as claimed in preceding claim 4,
**characterised in that** the four second fixing elements are respectively offset from the first fixing elements by an angle that is greater than 0° and smaller than 30°, in particular smaller than 15°.

7. Camera assembly as claimed in one of the preceding claims,
**characterised by** an adapter plate (430) having two or more optical apertures (432a-432b) which are designed to be connected to two or more adjacent camera housings accordingly by means of the first fixing elements, and the adapter tubes secured to the camera housings extend through the optical apertures of the adapter plate and the central axes of at least two adapter tubes lie on one line.

8. Camera assembly as claimed in one of the preceding claims,
**characterised by** an external casing surface on the adapter tube which lies concentrically with the external surface of the centring flange and which is disposed on the second end of the adapter tube.

9. Camera assembly as claimed in one of the preceding claims,
**characterised in that** the first fixing elements are bores, in particular threaded bores in the front plate of the camera housing.

10. Camera assembly as claimed in one of the preceding claims,
**characterised in that** the second fixing elements comprise bores, in particular threaded bores in the front plate of the camera housing, with fixing screws secured therein which are inserted through bores in a flange on the second end of the adapter tube.

11. Camera assembly as claimed in one of the preceding claims,
**characterised by** several camera housings disposed so as to form a camera with a line sensor, and every camera housing is connected to an adapter tube, and **characterised by** an adapter plate (530) having a number of optical apertures corresponding to the number of camera housings through which the several adapter tubes (510a-510d) extend accordingly, and the line sensors of the cameras are oriented parallel with one another.

12. Camera assembly as claimed in claim 11,
**characterised in that** the central axes of the adapter tubes lie on one line.

13. Camera assembly as claimed in one of the preceding claims,
**characterised by** several camera housings disposed so as to form a camera with an area sensor and every camera housing is connected to an adapter tube, and **characterised by** an adapter plate which has a number of optical apertures corresponding to the number of camera housings through which the several adapter tubes extend accordingly, and the central axes of the adapter tubes are disposed in a plurality of columns and rows relative to one another and thus form an array.

## Revendications

1. Ensemble formant caméra comprenant au moins un boîtier de caméra (20) et un moyen de fixation associé à chaque boîtier de caméra, servant à relier un objectif au boîtier de caméra, comprenant
- un capteur d'images numérique monté dans le boîtier de caméra,
- un tuyau adaptateur (10) avec un corps sensiblement cylindrique, un espace intérieur (19) délimité par une surface de paroi intérieure et une bride de raccordement (11a) servant à fixer de manière amovible différents objectifs au niveau d'une première extrémité (11) du tuyau adaptateur, et
- une plaque avant (21) du boîtier de caméra, avec au moins une ouverture optique et au moins deux premiers éléments de fixation (23a-d) disposés dans une zone autour de l'ouverture optique, servant à fixer le boîtier de caméra au niveau d'une fixation, **caractérisé en ce que**
- une deuxième extrémité (12), faisant face à la première extrémité, du tuyau adaptateur est fixée au niveau de la plaque avant du boîtier de caméra au moyen d'au moins deux deuxièmes éléments de fixation (13a-d, 14a-d) parallèles par rapport à l'axe central du tuyau adaptateur respectif, lesquels sont davantage espacés de l'axe central du tuyau adaptateur respectif que la surface de paroi intérieure du tuyau adaptateur, et que
- l'ouverture optique de la plaque avant présente une section axiale avec une paroi extérieure au moins en partie cylindrique, dont le diamètre est dimensionné avec une tolérance pour s'adapter avec un faible jeu par rapport au diamètre extérieur d'une bride de centrage (17) au niveau de la deuxième extrémité (12) du tuyau adaptateur.

2. Ensemble formant caméra selon la revendication 1,
**caractérisé en ce que** les deuxièmes éléments de fixation comprennent des alésages correspondants dans une bride réalisée au niveau du tuyau adaptateur, dont les axes centraux se trouvent à l'extérieur de l'espace intérieur du tuyau adaptateur.

3. Ensemble formant caméra selon la revendication 1 ou 2,
**caractérisé en ce que** les deuxièmes éléments de fixation sont répartis de manière homogène sur la périphérie aux fins de la fixation du tuyau adaptateur.

4. Ensemble formant caméra selon l'une quelconque des revendications précédentes,
**caractérisé en ce que** le tuyau adaptateur est fixé au niveau de la plaque avant du boîtier de caméra au moyen de quatre deuxièmes éléments de fixation disposés selon une distribution sur 90° autour de l'axe central du tuyau adaptateur.

5. Ensemble formant caméra selon la revendication 2 et 3,
**caractérisé en ce que** quatre premiers éléments de fixation disposés selon une distribution sur 90° autour de l'ouverture optique sont disposés au niveau de la plaque avant du boîtier de caméra, et **en ce que** les quatre deuxièmes éléments de fixation sont décalés par rapport aux premiers éléments de fixation selon un angle, qui est supérieur à 0° et inférieur à 45°, dans lequel de préférence les premiers et les deuxièmes éléments de fixation sont disposés sur des cercles concentriques autour de l'axe longitudinal central du tuyau adaptateur.

6. Ensemble formant caméra selon la revendication 4 précédente,
**caractérisé en ce que** les quatre deuxièmes éléments de fixation sont respectivement décalés par rapport aux premiers éléments de fixation selon un angle, qui est supérieur à 0° et inférieur à 30°, en particulier inférieur à 15°.

7. Ensemble formant caméra selon l'une quelconque des revendications précédentes,
**caractérisé par** une plaque adaptatrice (430) avec deux ouvertures (432a - 432b) optiques ou plus, laquelle est réalisée afin d'être reliée de manière correspondante à deux boîtiers de caméra ou plus les uns à côté des autres au moyen des premiers éléments de fixation, les tuyaux adaptateurs fixés au niveau des boîtiers de caméra s'étendant au travers des ouvertures optiques de la plaque adaptatrice et les axes centraux d'au moins deux tuyaux adaptateurs se trouvant sur une ligne.

8. Ensemble formant caméra selon l'une quelconque des revendications précédentes,
**caractérisé par** une surface enveloppante extérieure au niveau du tuyau adaptateur, laquelle est agencée de façon concentrique par rapport à la surface extérieure de la bride de centrage et qui est disposée au niveau de la deuxième extrémité du tuyau adaptateur.

9. Ensemble formant caméra selon l'une quelconque des revendications précédentes,
**caractérisé en ce que** les premiers éléments de fixation sont des alésages, en particulier des alésages filetés dans la plaque avant du boîtier de caméra.

10. Ensemble formant caméra selon l'une quelconque des revendications précédentes,
**caractérisé en ce que** les deuxièmes éléments de fixation comprennent des alésages, en particulier des alésages filetés dans la plaque avant du boîtier de caméra, comprenant des vis de fixation fixées à l'intérieur, lesquelles sont enfichées par des alésages dans une bride au niveau de la deuxième extrémité du tuyau adaptateur.

11. Ensemble formant caméra selon l'une quelconque des revendications précédentes,
**caractérisé par** plusieurs boîtiers de caméra réalisés sous la forme d'une caméra avec un capteur linéaire, dans lequel chaque boîtier de caméra est relié à un tuyau adaptateur, et
**caractérisé par** une plaque adaptatrice (530), qui présente un nombre d'ouvertures optiques correspondant au nombre des boîtiers de caméra, à travers lesquelles ouvertures les plusieurs tuyaux adaptateurs (510a - 510d) s'étendent de manière correspondante, et en ce que les capteurs linéaires des caméras sont orientés de manière parallèle les uns par rapport aux autres.

12. Ensemble formant caméra selon la revendication 11,
**caractérisé en ce que** les axes centraux des tuyaux adaptateurs se trouvent sur une ligne.

13. Ensemble formant caméra selon l'une quelconque des revendications précédentes,
**caractérisé par** plusieurs boîtiers de caméra réalisés sous la forme d'une caméra avec un capteur de surface, chaque boîtier de caméra étant relié à un tuyau adaptateur, et **caractérisé par** une plaque adaptatrice, qui présente un nombre d'ouvertures optiques correspondant au nombre des boîtiers de caméra, à travers lesquelles ouvertures les plusieurs tuyaux adaptateurs s'étendent de manière correspondante, et en ce que les axes centraux des tuyaux adaptateurs sont disposés les uns par rapport aux autres en une pluralité de colonnes et de lignes et réalisent de cette manière un champ de matrice.
